# EUROPEAN PATENT APPLICATION

(11) **EP 2 611 192 A1**
(43) Date of publication of application: **03.07.2013**
(21) Application number: 12198204.5
(22) Date of filing: 19.12.2012
(51) Int. Cl.: H04N 21/418, H04N 21/45, H04N 21/458, H04N 21/485, H04N 21/81

(54) **Display apparatus upgrading apparatus and control method of the same and display system**

(30) Priority: 30.12.2011 KR 20110147300; 31.01.2012 KR 20120009988; 31.01.2012 KR 20120010075; 17.09.2012 KR 20120102749
(71) Applicant: Samsung Electronics Co., Ltd., Gyeonggi-do 443-742 (KR)
(72) Inventor: Park, Jung-il, Gyeonggi-do (KR); Ko, Chang-Seog, Gyeonggi-do (KR); Kim, Jung-geun, Gyeonggi-do (KR); Choi, Jun-sik, Gyeonggi-do (KR)
(74) Representative: Bray, Richard Anthony

(57) **Abstract**

A display apparatus includes: a display; an image processor which processes an image signal which has been received based on an external input state selected from at least one preset external input state, by using a preset image processing operation, and displays an image on the display based on the processed image signal; a connector to which an upgrading apparatus that upgrades the image processing operation is connected; and a controller which displays, on the display, a user interface (UI) image for selecting one of the at least one preset external input state, and if it is determined that an image signal is capable of being received by the upgrading apparatus not via the display apparatus, displays the selected external input state and the upgrading apparatus in the Ul image.

## Description

### BACKGROUND

### Field

Apparatuses and methods consistent with exemplary embodiments relate to a display apparatus which processes an image signal which is supplied by an image supply source, by using a preset image processing operation, and displays an image based on the processed image signal, an upgrading apparatus which upgrades the display apparatus, a display system which includes the display apparatus and the upgrading apparatus, and a control method of the same, and more particularly, to a display apparatus, an upgrading apparatus, a display system and a control method of the same which improves existing operations of the display apparatus by connecting the upgrading apparatus to the display apparatus.

### Description of the Related Art

A display apparatus processes image signals and/or image data supplied by external various signal supply sources or stored therein, and displays an image on a display panel based on the processed image signals and/or image data. The display apparatus which is provided to general users may include a television (TV) or a monitor. For example, the display apparatus which is implemented as a TV processes a broadcasting signal supplied from the outside, by using various image processing operations including decoding and scaling operations, and provides an image of a desired broadcasting channel.

The display apparatus has an image processing board built therein which is implemented as a circuit configuration, including various chipsets and memories to perform the aforementioned image processing operations. The capability which is required for the display apparatus has been diversified and extended due to various factors, including the development of technology, in response to user demand and enhancement of convenience. Improvement of functions of the display apparatus, i.e., upgrading the display apparatus, may be conducted in terms of both hardware and software.

In terms of hardware, all or at least a part of the image processing board installed in the display apparatus should physically be replaced in order to upgrade the display apparatus. However, such replacement is not efficient from the perspectives of both production and usage. In terms of software, the display apparatus requires hardware which is designed to drive improved software. After all, general users should purchase a new, upgraded display apparatus.

### SUMMARY

According to the present invention there is provided an apparatus and method as set forth in the appended claims. Other features of the invention will be apparent from the dependent claims, and the description which follows.

The foregoing and/or other aspects may be achieved by providing a display apparatus including: a display; an image processor which processes an image signal which has been received based on an external input state which is selected from at least one preset external input state, by using a preset image processing operation, and displays an image on the display based on the processed image signal; a connector to which an upgrading apparatus that upgrades the image processing operation is connectable; and a controller which displays, on the display, a user interface (UI) image for selecting one of the at least one preset external input state, and if a determination is made that an image signal is capable of being received by the upgrading apparatus via a route that does not include the display apparatus, displays information relating to the selected external input state and information relating to the upgrading apparatus in the UI image.

If the external input state of the image signal received by the upgrading apparatus is selected via the UI image, the controller may change a reception of the image signal based on the selected external input state.

The upgrading apparatus may include an upgrading apparatus receiver which receives the image signal, and the controller may determine that the upgrading apparatus is capable of receiving the image signal directly, based on the upgrading apparatus including the upgrading apparatus receiver.

The controller may display information relating to a connection state of the upgrading apparatus with respect to the connector as one of the at least one preset external input state of the display apparatus in the UI image.

The UI image may facilitate a user selection of at least one first function provided by the display apparatus and at least one second function provided by the upgrading apparatus with respect to the image processing operation, and the controller may control the image processing operation to be performed based on the first and second functions that have been selected by the user.

The display apparatus may further include a switch which, which switched on, causes the display apparatus to transmit at least one of the image signal and power to the upgrading apparatus via the connector.

When the upgrading apparatus is not connected to the connector, the controller may display information relating to a default mode in which the display apparatus performs a default operation, in the UI image, and when the upgrading apparatus is connected to the connector, the controller may display information relating to a connection mode of the upgrading apparatus in the UI image.

The connector may include a plurality of connection terminals, each of the plurality of connection terminals being connectable to the upgrading apparatus and to at least one image supply source, and the UI image may facilitate a user selection of at least one of the plurality of connection terminals.

The controller may delete the selected at least one connection terminal from among the plurality of connection terminals from the UI image.

If two or more connection terminals are connected to the upgrading apparatus, the controller may display in the UI image only one of the two or more connection terminals that are connected to the upgrading apparatus.

Upon connection of the upgrading apparatus, the controller may delete the information relating to the default mode used when the upgrading apparatus is not connected from the UI image, and may display the information relating to the connection mode of the upgrading apparatus in the UI image.

The display apparatus may include a TV and the default mode may include a mode in which a broadcasting signal is displayed based on a broadcasting signal.

Another aspect may be achieved by providing an upgrading apparatus for use in conjunction with a display apparatus, the upgrading apparatus including: a connector which is connectable to the display apparatus that processes an image signal that is received based on an external input state which is selected from at least one preset external input state based on a preset image processing operation and displays an image based on the processed image signal; and an image processor which performs an upgraded image processing operation when the display apparatus is connected to the connector, wherein the display apparatus includes a controller which displays information relating to respective external input states of the display apparatus and information relating to the upgrading apparatus in a UI image if an image signal is capable of being received by the upgrading apparatus via a route that does not include the display apparatus, in order to facilitate a user selection of at least one of the respective external input states of the display apparatus.

If the external input state of the image signal which is received by the upgrading apparatus is selected via the UI image, the controller may change a reception of the image signal based on the selected external input state.

The upgrading apparatus may further include an upgrading apparatus receiver which receives the image signal, wherein the controller may determine that the upgrading apparatus is capable of receiving the image signal directly, based on a determination that the upgrading apparatus includes the upgrading apparatus receiver.

The controller may display information relating to a connection state of the upgrading apparatus with respect to the display apparatus as one of the respective external input states of the display apparatus in the UI image.

The UI image may facilitate a user selection of at least one first function provided by the display apparatus and at least one second function provided by the upgrading apparatus, and the controller may control an image processing operation to be performed based on the first and second functions that have been selected by the user.

The display apparatus may further include a switch which, when switched on, causes the display apparatus to transmit at least one of the image signal and power to the upgrading apparatus, and the controller may control the switch based on the user selection.

When the display apparatus is connected to the connector, the controller may display information relating to a connection mode of the upgrading apparatus in the UI image, and when the display apparatus is not connected to the connector, the controller may display, in the UI image, information relating to a default mode in which the display apparatus performs a default operation.

The display apparatus may include a plurality of connection terminals, each of the plurality of connection terminals being connectable to the connector and to at least one image supply source, and the UI image may facilitate a user selection of at least one of the plurality of connection terminals.

The controller may delete the selected at least one connection terminal from among the plurality of connection terminals from the UI image.

If two or more connection terminals are connected to the connector, the controller may display in the UI image only one of the two or more connection terminals that are connected to the connector.

Upon connection of the display apparatus, the controller may delete the information relating to the default mode used when the display apparatus is not connected to the connector, from the UI image, and may display the information relating to the connection mode of the upgrading apparatus in the UI image.

Another aspect may be achieved by providing a control method which is executable by using a display apparatus including: processing an image signal that is received based on an external input state which is selected from at least one preset external input state, by using a preset image processing operation, and displaying an image based on the processed image signal; and displaying a UI image which facilitates a user selection of at least one of the at least one preset external input state, wherein the displaying the UI image includes displaying information relating to respective external input states of the display apparatus and information relating to an upgrading apparatus which upgrades the image processing operation and which is connectable to the display apparatus in the UI image if a determination is made that, upon connection of the upgrading apparatus to the display apparatus, the upgrading apparatus is capable of receiving the image signal via a route that does not include the display apparatus.

Another aspect may be achieved by providing a control method which is executable by using an upgrading apparatus for use in conjunction with a display apparatus, the method including: connecting to a display apparatus which processes an image signal that is received based on an external input state which is selected from at least one preset external input state, based on a preset image processing operation, and displays an image based on the processed image signal; upgrading the image processing operation and processing the image signal by using the upgraded image processing operation when the display apparatus is connected; and causing the display apparatus to display a UI image that facilitates a user selection of one of the at least one preset external input state, wherein the causing the display apparatus to display the UI image includes causing the display apparatus to display information relating to respective external input states of the display apparatus and information relating to the upgrading apparatus in the UI image if the upgrading apparatus is capable of receiving the image signal via a route that does not include the display apparatus.

Another aspect may be achieved by providing a display system including: a display apparatus which processes an image signal that is received based on an external input state which is selected from at least one preset external input state, by using a preset image processing operation, and displays an image based on the processed image signal; and an upgrading apparatus which is connected to the display apparatus and which upgrades the image processing operation and processes the image signal by using the upgraded image processing operation, wherein a UI image which facilitates a user selection of one of the at least one preset external input state includes information relating to respective external input states of the display apparatus and information relating to the upgrading apparatus if the image signal is capable of being received by the upgrading apparatus via a route that does not include the display apparatus.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates an example of a display system, according to a first exemplary embodiment;
FIG. 2 is a block diagram of the display system illustrated in FIG. 1;
FIGS. 3 and 4 illustrate a method for upgrading an image processing operation of a display apparatus by using an upgrading apparatus in conjunction with the display system illustrated in FIG. 1;
FIG. 5 illustrates an example of a first connector of the display apparatus illustrated in FIG. 1;
FIG. 6 illustrates an example of a user interface (UI) image showing external input states displayed by the display apparatus when the upgrading apparatus is not connected to the display apparatus in the display system illustrated in FIG. 1;
FIG. 7 illustrates an example of a user interface (UI) image showing external input states displayed by the display apparatus when the upgrading apparatus is connected to the display apparatus in the display system illustrated in FIG. 1;
FIG. 8 is a control flowchart which illustrates a control method which is executable by using the display apparatus illustrated in FIG. 1;
FIG. 9 illustrates a case in which image supply sources and an upgrading apparatus are connected to a first connector of a display apparatus in a display system, according to a second exemplary embodiment;
FIG. 10 illustrates an example of a UI image displayed by the display apparatus when the display apparatus and the upgrading apparatus are not connected to each other in the display system illustrated in FIG. 9;
FIGS. 11 and 12 illustrate an example of a UI image displayed by the display apparatus when the display apparatus and the upgrading apparatus are connected to each other in the display system illustrated in FIG. 9;
FIG. 13 is a control flowchart which illustrates a control method which is executable by using the display system illustrated in FIG. 9;
FIGS. 14 and 15 illustrate an example of a UI image displayed by a display apparatus, according to a third exemplary embodiment;
FIG. 16 is a block diagram of the display apparatus illustrated in FIG. 14; and
FIG. 17 is a control flowchart which illustrates a control method which is executable by using the display apparatus illustrated in FIG. 14.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

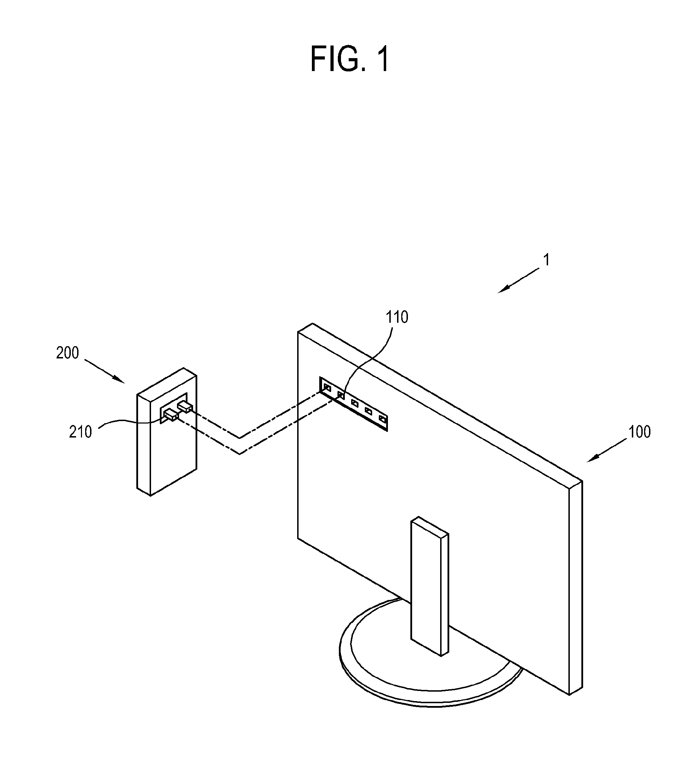

FIG. 1 illustrates an example of a display system 1, according to an exemplary embodiment.

As shown therein, the display system 1 according to the present exemplary embodiment includes a display apparatus 100 which processes an image signal supplied by an external signal supply source (not shown), by using a preset image processing operation, and displays an image based on the processed image signal, and an upgrading apparatus 200 which upgrades hardware and/or software of the display apparatus 100.

The display apparatus 100 of the display system 1 according to the present exemplary embodiment is implemented as a television (TV) which displays a broadcasting image based on broadcasting signals and/or broadcasting information and/or broadcasting data which is received from a transmission apparatus of a broadcasting station. However, the concept of the present exemplary embodiment is not limited to the foregoing exemplary embodiment type of the display apparatus 100. The display apparatus 100 may include various types of display apparatuses, as long as they display an image.

The type of an image which is displayable by the display apparatus 100 is not limited to the broadcasting image, and may include, for example, at least one of a video, still image, applications, on screen display (OSD), and a graphic user interface (GUI) to control various operations, based on signals and/or data transmitted by various signal supply sources (not shown).

The upgrading apparatus 200 is connected to the display apparatus 100 for communication therebetween. The upgrading apparatus 200 upgrades existing hardware and/or software of the connected display apparatus 100 so that the upgraded hardware and/or software of the display apparatus 100 process an image signal and display an image with improved quality.

The upgrading apparatus 200 may be connected to the display apparatus 100 in a wired and/or wireless manner. The upgrading apparatus 200 according to the present exemplary embodiment may be connected to the display apparatus 100 in a wired manner in order to exchange at least one of data, information, signals, and power with the display apparatus 100. The upgrading apparatus 200 and the display apparatus 100 include connectors and/or terminals 110 and 210 for mutual physical/electric connection.

Unlike in the present exemplary embodiment as illustrated in FIG. 1, the upgrading apparatus 200 may be connected to the display apparatus 100 in a wireless manner, in which case, the upgrading apparatus 200 receives operating power from an additional external power source or a battery. However, in the present exemplary embodiment with respect to FIG. 1, the case in which the upgrading apparatus 200 is connected to the display apparatus 100 in a wired manner will be described below.

The display apparatus 100 may solely process an image signal, which is transmitted from the outside, by using a preset image processing operation, and display an image based on the processed image signal. However, the hardware and/or software of the display system 1 which performs the image processing operation are upgraded by the connection of the display apparatus 100 and the upgrading apparatus 200, and accordingly, an image with improved quality may be provided.

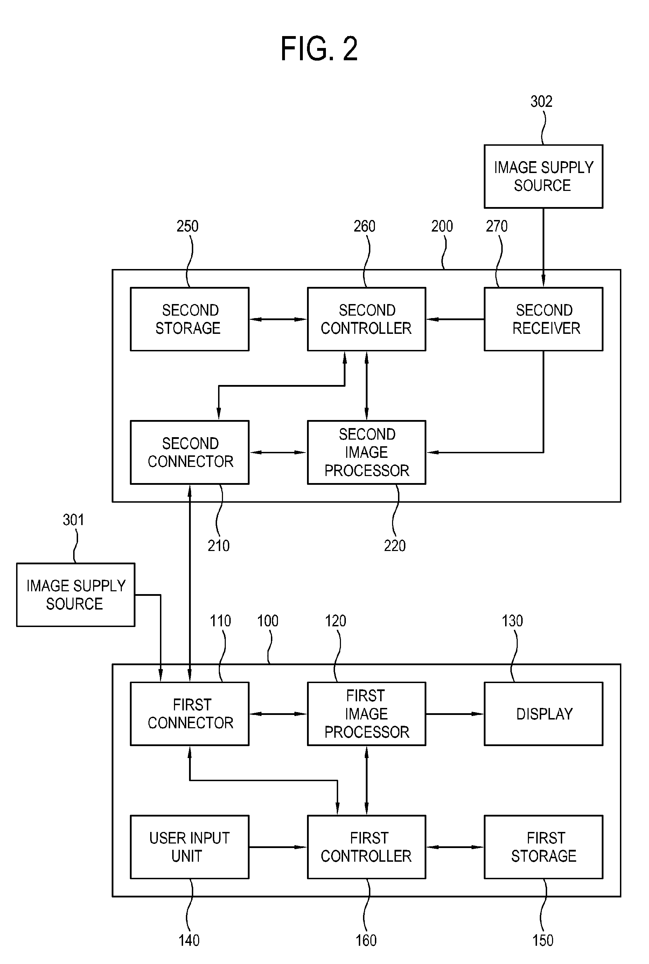

Hereinafter, configurations of the display apparatus 100 and the upgrading apparatus 200 will be described with reference to FIG. 2. FIG. 2 is a block diagram of the display apparatus 100 and the upgrading apparatus 200 which form the display system 1.

As shown therein, the display apparatus 100 includes a first connector 110 which is connected to at least one image supply source 301, a first image processor 120 which processes the image signal received from the image supply source 301 via the first connector 110, a display 130 which displays an image thereon based on the image signal processed by the first image processor 120, a user input unit 140 which outputs a preset command based on a user's manipulation, a first storage 150 which stores unlimited types of data and/or information therein, and a first controller 160 which controls overall operations of the display apparatus 100.

The first connector 110 transmits an image signal which is received from the at least one image supply source 301 to the first image processor 120, and which image signal varies depending on a standard of a received image signal or the embodiment type of the image supply source 301 and the display apparatus 100. For example, the first connector 110 may receive signals and/or data according to at least one of high definition multimedia interface (HDMI), universal serial bus (USB), Component, and other standards, and may include a plurality of connection terminals (not shown) which respectively correspond to the foregoing standards. As the connection terminals are connected to various external devices including the image supply source 301, communication may be performed via the first connector 110.

In particular, the external device connected to the first connector 110 is not limited to the image supply source 301, and any device which may exchange signals and/or data with the display apparatus 100 via the first connector 110 may be connected to the first connector 110. Thus, according to the present exemplary embodiment, the upgrading apparatus 200 may also be connected to the first connector 110.

The first image processor 120 processes an image signal which is received from the first connector 110, by using at least one of a plurality of preset various image processing operations. The first image processor 120 outputs the processed image signal to the display 130 in order to display an image on the display 130 based on the image signal.

The image processing operation of the first image processor 120 may include, but not limited to, at least one of a de-multiplexing operation for dividing a predetermined signal by nature, a decoding operation which corresponds to an image format of an image signal, a deinterlacing operation for converting an interlace image signal into a progressive image signal, a scaling operation for adjusting an image signal into a preset resolution, a noise reduction operation for improving an image quality, a detail enhancement operation, a frame refresh rate conversion, and/or any other suitable image processing operation.

The first image processor 120 may be implemented as an image processing board (not shown) which is formed by mounting various chipsets (not shown), memories (not shown), electronic parts (not shown), wirings (not shown), and/or other suitable components on a printed circuit board (PCB) (not shown) to perform the foregoing image processing operations.

The display 130 displays an image thereon based on an image signal which is output by the first image processor 120. The display 130 may be implemented as any of various display panels including, for example, liquid crystal, plasma, light-emitting diode (LED), organic light-emitting diode (OLED), surface-conduction electron-emitter, carbon nano-tube, and nano-crystal, but not limited thereto.

The display 130 may further include one or more additional elements depending on its embodiment type. For example, the display 130 as an LCD type may include an LCD panel (not shown), a backlight unit (not shown) to emit light to the LCD panel, and a panel driving substrate (not shown) to drive the LCD panel (not shown).

The user input unit 140 transmits preset various control commands or unlimited information to the first controller 160 based on a user's manipulation and input. The user input unit 140 may be implemented, for example, as a menu key and an input panel installed in an external part of the display apparatus 100, or as a remote controller which is separated/spaced from the display apparatus 100.

The user input unit 140 may be integrally formed in the display 130. In particular, if the display 130 includes a touch screen, a user may transmit a preset command to the first controller 160 via an input menu (not shown) which is displayed on the display 130.

The first storage 150 stores therein unlimited types of data based on a control performed by the first controller 160. The first storage 150 may be implemented as a non-volatile memory, such as, for example, a flash memory or a hard disc drive. The first storage 150 is accessed by the first controller 160, and data stored therein may be read, recorded, modified, deleted, and/or updated by the first controller 160.

The data which are stored in the first storage 150 may include, for example, at least one of an operating system (OS), various applications which are executed on the OS, image data, and additional data.

The first controller 160 controls various elements of the display apparatus 100. For example, the first controller 160 controls the first image processor 120 to process image signals, controls the first connector 110 to exchange signals and/or information and/or data, and performs a control operation in response to a command of the user input unit 140 to thereby control entire operations of the display apparatus 100.

Over time, the display apparatus 100 having the foregoing configuration must be upgraded due to various factors, including the development of technology. More specifically, the display apparatus 100 should be upgraded in order to receive an image signal in a new format which was not offered at the time of manufacturing the display apparatus 100, or to receive an image signal which has a resolution that is higher than the resolution level supported by the display apparatus 100, or to reduce a system load to the display apparatus 100.

Upgrading the display apparatus 100 may be conducted in terms of both hardware and software. According to the present exemplary embodiment, the upgrading apparatus 200 which is provided to upgrade the display apparatus 100 is connected to the first connector 110, and upgrades at least one of existing hardware and software configurations of the display apparatus 100.

The upgrading apparatus 200 includes hardware and/or software configurations which respectively correspond to at least a part of hardware and/or software resources of the display apparatus 100. The configurations of the upgrading apparatus 200 may perform an improved function as compared with the at least a part of the resources of the display apparatus 100. Upon connection to the display apparatus 100, the upgrading apparatus 200 replaces at least a part of existing resources of the display apparatus 100 to ultimately improve quality of an image displayed by the display apparatus 100.

Hereinafter, a configuration of the upgrading apparatus 200 will be described.

The upgrading apparatus 200 includes a second connector 210 which is connected to the first connector 110 of the display apparatus 100, a second image processor 220 which performs operations corresponding to at least a part of the image processing operations of the first image processor 120, a second storage 250 which stores unlimited types of data and/or information therein, and a second controller 260 which controls overall operations of the upgrading apparatus 200.

The second connector 210 is connected to the first connector 110 in order to enable communication between the upgrading apparatus 200 and the display apparatus 100. The second connector 210 complies with standards corresponding to the first connector 110 in order to be connected to the first connector 110. The second connector 210 may be connected to at least one of a plurality of connection terminals (not shown) of the first connector 110.

For example, the second connector 210 may be connected to an HDMI terminal (not shown) to exchange image signals between the display apparatus 100 and the upgrading apparatus 200, and connected to an USB terminal (not shown) to exchange data and power therebetween, from among the plurality of connection terminals of the first connector 110. However, this is an example, and the connection type of the first and second connectors 110 and 210 may vary.

The second processor 220 may perform a second process which corresponds to at least a part of a first process performed by the first processor 120 of the display apparatus 100. The first and second processes are designated as such for distinction purposes only, and may include, for example, a single process or a plurality of unit processes. The second process is improved in functionality as compared with the first process, and this is realized by improvement of hardware, such as chipsets, or improvement of software, such as algorithms, execution codes, and/or programs.

The second processor 220 performs the second process instead of the first process, based on a control performed by the first controller 160 or the second controller 260, if the display apparatus 100 and the upgrading apparatus 200 are connected to each other. As the image processing operation is performed, the second process which is improved in functionality as compared with the first process may replace the first process, thereby resulting in an improvement of efficiency in the image processing operation. A relevant exemplary embodiment will be described in detail below.

The second storage 250 stores therein unlimited types of data. The second storage 250 may be implemented as a non-volatile memory, such as, for example, a flash memory or a hard disc drive. The second storage 250 may be accessed by the first controller 160 or the second controller 260, and data stored therein may be read, recorded, modified, deleted, and/or updated by the first controller 160 or the second controller 260. Depending on the embodiment type of the first storage 150, the first storage 150 may also be accessed by the second controller 260 as well as by the first controller 160.

The second controller 260 controls a connection operation between the display apparatus 100 and the upgrading apparatus 200 in order to perform the entire image processing operation. The second controller 260 and the first controller 160 may be implemented, for example, as a central processing unit (CPU). If the second controller 260 may perform an improved function as compared with the first controller 160, the second controller 260 may disable the first controller 160 and control the entire operations of the display system 1 in place of the first controller 160. Alternatively, the second controller 260 may jointly control the entire operations of the display system 1 in conjunction with the first controller 160.

With the foregoing configuration of the upgrading apparatus 200, the image signal which is processed by the second image processor 220 may be the same signal as the image signal which is supplied by the image supply source 301 to the display apparatus 100. In particular, the upgrading apparatus 200 may receive the image signal which will be processed from the display apparatus 100.

Alternatively, the upgrading apparatus 200 may directly receive the image signal from an image supply source 302, rather than receiving the image signal via the display apparatus 100. In this case, the upgrading apparatus 200 may further include a second receiver 270 which receives the image signal from the image supply source 302. In the drawings, the image supply sources 301 and 302 may have different or identical configurations.

Depending on a design method, the upgrading apparatus 200 may or may not include the second receiver 270. If there is no second receiver 270, the upgrading apparatus 200 may not receive the image signal directly from the image supply source 302, but may instead receive the image signal from the display apparatus 100. If there is a second receiver 270, the upgrading apparatus 200 may receive the image signal directly from the image supply source 302 as well as from the display apparatus 100.

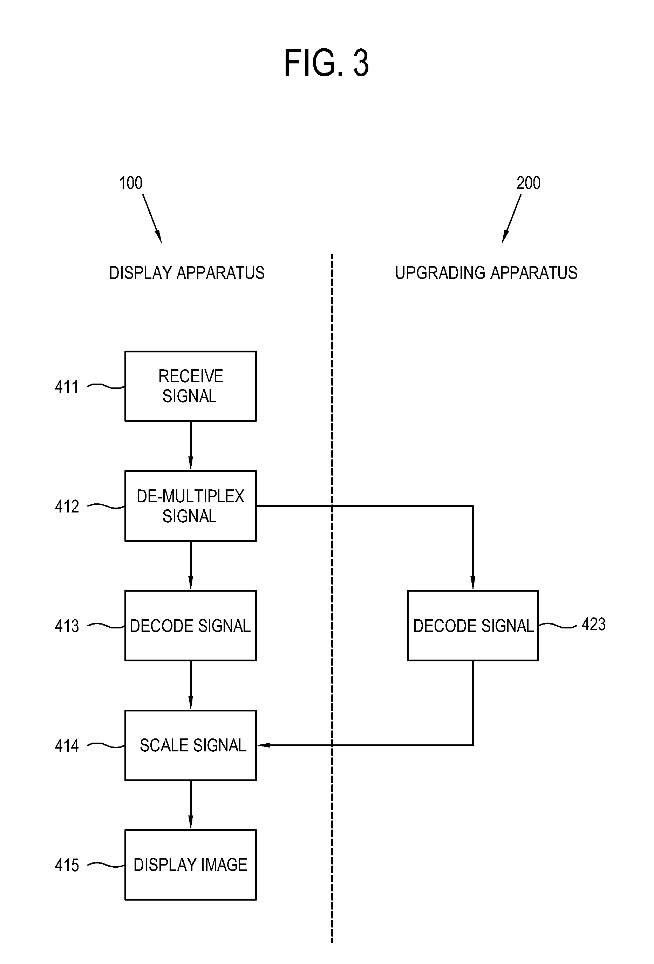

Hereinafter, an exemplary embodiment of upgrading the display apparatus 100 by using the upgrading apparatus 200 will be described in detail with reference to FIG. 3. FIG. 3 is a flowchart which illustrates a method for upgrading the image processing operation of the display apparatus 100 by using the upgrading apparatus 200 in the display system 1 according to the present exemplary embodiment.

As shown in FIG. 3, in operation 411, if the image supply source 301 supplies a predetermined signal, e.g., a broadcasting signal, the display apparatus 100 processes the broadcasting signal by performing each of image processing operations 412, 413 and 414 in a preset sequence. The image processing operations 412, 413 and 414 shown in FIG. 3 are examples which are provided to briefly illustrate the present exemplary embodiment, but do not represent all of the possible image processing operations which may be performed by the display apparatus 100.

In operation 412, the display apparatus 100 performs a de-multiplexing operation in order to divide the received broadcasting signal into an image signal, an audio signal and additional data. In operation 413, the display apparatus 100 processes the de-multiplexed signal, e.g., by decoding the image signal into a preset image format. In operation 414, the display apparatus 100 scales the decoded image signal into a predetermined resolution, and in operation 415, the display apparatus 100 displays an image based on the scaled image signal.

In the foregoing sequence, the upgrading apparatus 200 may perform a process 423 which corresponds to the decoding process 413 of the display apparatus 100. The decoding process 423 of the upgrading apparatus 200 is the same in an operational aspect as the decoding process 413 of the display apparatus 100, but improved in quality of functionality as compared with the decoding process 413. Thus, performing the decoding process 423 rather than the decoding process 413 may result in an overall improvement of the image processing operation.

For example, the decoding process 423 may include at least one of processing an image signal which has a resolution that may not be able to be processed by using the decoding process 413, processing an image signal in a format that may not be able to be processed by using the decoding process 413, or applying an additional effect to the image signal which additional effect may not be able to be applied by using the decoding process 413.

In the sequence of the image processing operations according to the present exemplary embodiment, based on a control performed by the first controller 160 or the second controller 260, the decoding process 423 of the upgrading apparatus 200 replaces the decoding process 413 of the display apparatus 100 after the de-multiplexing process 412. After the decoding process 423 of the upgrading apparatus 200, the scaling process 414 is performed.

In the foregoing sequence, the display apparatus 100 and the upgrading apparatus 200 exchange the image signal and control signal based on a control of the first controller 160 or the second controller 260.

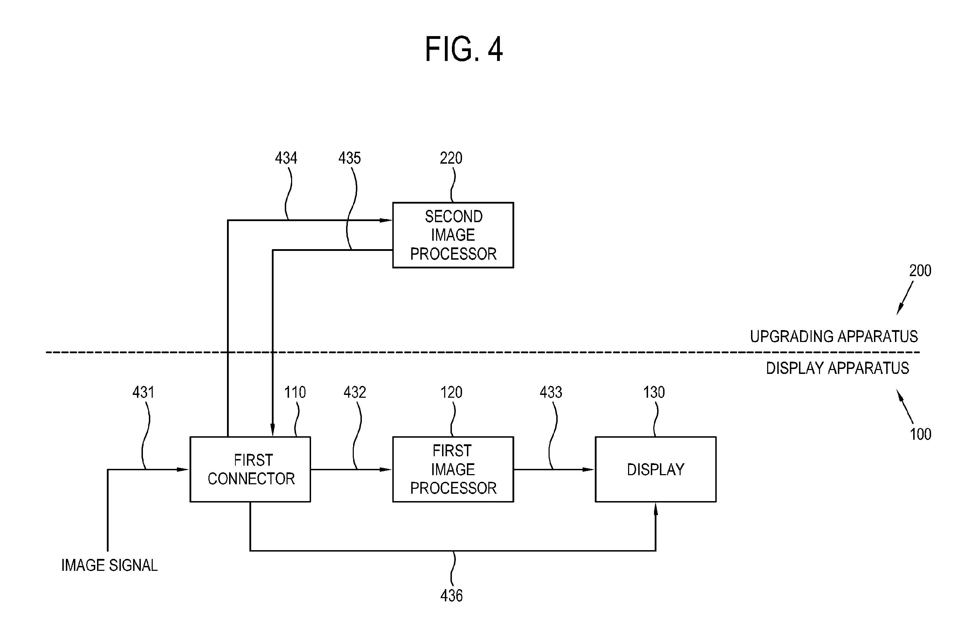

Unlike in the case in FIG. 3 in which a part of the image processing operations is replaced, the second image processor 220 of the upgrading apparatus 200 may replace the entirety of the operations of the first image processor 120 of the display apparatus 100. This will be described with reference to FIG. 4. FIG. 4 is a block diagram which illustrates a process for transmitting an image signal received by the first connector 110 in the display system 1 according to the present exemplary embodiment.

As shown in FIG. 4, if the upgrading apparatus 200 is not connected to the display apparatus 100, then an image signal which is received by the first connector 110 in operation 431 is transmitted to the first image processor 120 in operation 432. In operation 433, the first image processor 120 processes the image signal and outputs the processed image signal to the display 130 (433). The display 130 displays an image thereon based on the image signal processed by the first image processor 120.

If the upgrading apparatus 200 is connected to the display apparatus 100, then an image signal which is received by the first connector 110 in operation 431 is transmitted to the second image processor 220 rather than to the first image processor 120 in operation 434. The second image processor 220 processes the image signal in place of the first image processor 120, and in operation 435, the image signal processed by the second image processor 220 is transmitted back to the display apparatus 100.

In operation 436, the image signal is transmitted to the display 130, bypassing the first image processor 120, and thus the display 130 displays an image thereon based on the image signal processed by the second image processor 220. Alternatively, the image signal may be transmitted by the first connector 110 to the first image processor 120, which may transmit the image signal to the display 130 rather than processing the image signal.

If the display apparatus 100 and the upgrading apparatus 200 are connected to each other, the second controller 260 may disable the first controller 160 and control the first image processor 120 and the second image processor 220. If an operating system (OS) which is stored in the second storage 250 is an upgraded version of the OS which is stored in the first storage 150, the OS of the first storage 150 is updated to the OS of the second storage 250, and the updated OS is used. Alternatively, the OS of the second storage 250 rather than the OS of the first storage 150 may be used.

With the foregoing configuration, the upgrading apparatus 200 according to the present exemplary embodiment may upgrade the display apparatus 100.

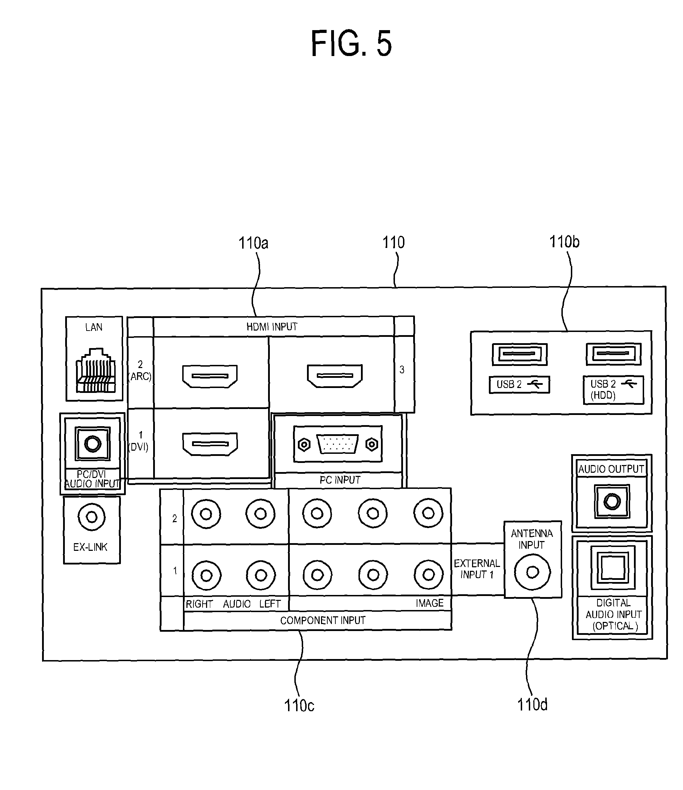

FIG. 5 illustrates an example of the first connector 110 of the display apparatus 100.

As shown in FIG. 5, the first connector 110 may receive signals and/or data based on an external input of any one of various standards such as HDMI, USB, Component, and antenna input, and includes a plurality of connection terminals 110a, 110b, 110c and 110d which respectively correspond to the foregoing standards. The connection terminals 110a, 110b, 110c and 110d shown in FIG. 5 are respective examples of those which may be included in the first connector 110. The first connector 110 may include unlimited, various connection terminals 110a, 110b, 110c and 110d based on a respective standard of an external input.

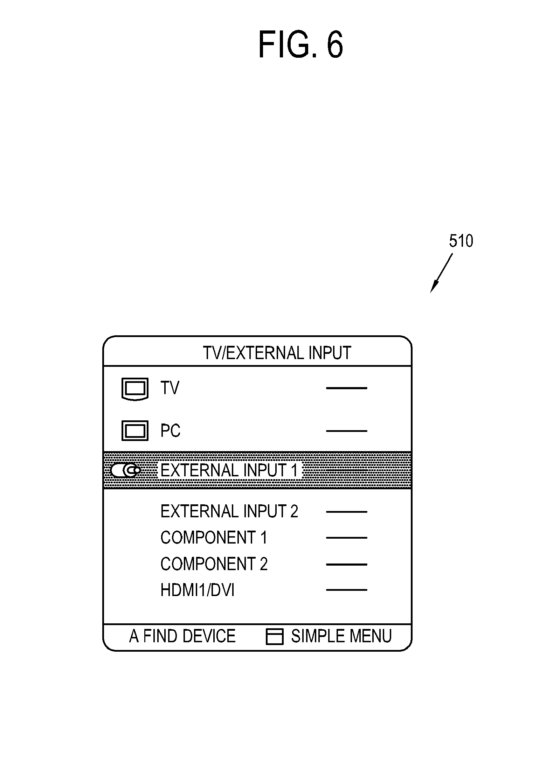

FIG. 6 illustrates an example of a user interface (UI) image 510 which includes information relating to respective external input states, which image 510 is displayed by the display apparatus 100 when the upgrading apparatus 200 is not connected to the display apparatus 100.

The first connector 110 may receive an image signal from various types of image supply sources 301 based on various standards. If the case of receiving an image signal from a single image supply source 301 indicates one external input state, the case of receiving image signals from a respective plurality of image supply sources 301 may indicate a corresponding plurality of external input states.

In the plurality of external input states, the display apparatus 100 may display the UI image 510 as shown in FIG. 6 in order to facilitate a user selection of one of the plurality of external input states. The UI image 501 is an image which is displayed by the display apparatus 100 when the upgrading apparatus 200 is not connected thereto.

The UI image 510 facilitates a user selection of one of the plurality of external input states of the display apparatus 100. In particular, the UI image 510 prompts a user's input regarding the selection and display of a plurality of image signals received via the connection terminals 110a, 110b, 110c and 110d (referring to FIG. 5) of the first connector 110.

For example, upon an occurrence of an event for selecting an external input state via the user input unit 140, the display apparatus 100 displays the UI image 510. If one of the connection terminals 110a, 110b, 110c and 110d is selected via the UI image 510, the display apparatus 100 processes the image signal which is received via the selected connection terminal and displays an image based on the processed image signal.

Upon an occurrence of an event for displaying the UI image 510 while the display apparatus 100 is connected to the upgrading apparatus 200, the display apparatus 100 according to the present exemplary embodiment operates as follows:

The display apparatus 100 communicates with the upgrading apparatus 200 and determines whether the upgrading apparatus 200 may directly receive the image signal, i.e., whether the upgrading apparatus 200 is capable of receiving the image signal via a route which does not include the display apparatus 100. For example, the display apparatus 100 determines as described above, depending on whether the upgrading apparatus 200 includes an element corresponding to the second receiver 270, as shown in FIG. 2.

The display apparatus 100 may determine that the upgrading apparatus 200 does not have the element corresponding to the second receiver 270, i.e., the upgrading apparatus 200 cannot directly receive the image signal via a route that does not include the display apparatus 100. In this case, upon an occurrence of an event for selecting the external input state, the display apparatus 100 displays the UI image 510 as shown in FIG. 6.

Conversely, the display apparatus 100 may determine that the upgrading apparatus 200 includes the element corresponding to the second receiver 270, i.e., the upgrading apparatus 200 may directly receive the image signal and does not require that the image signal be routed via the display apparatus 100.

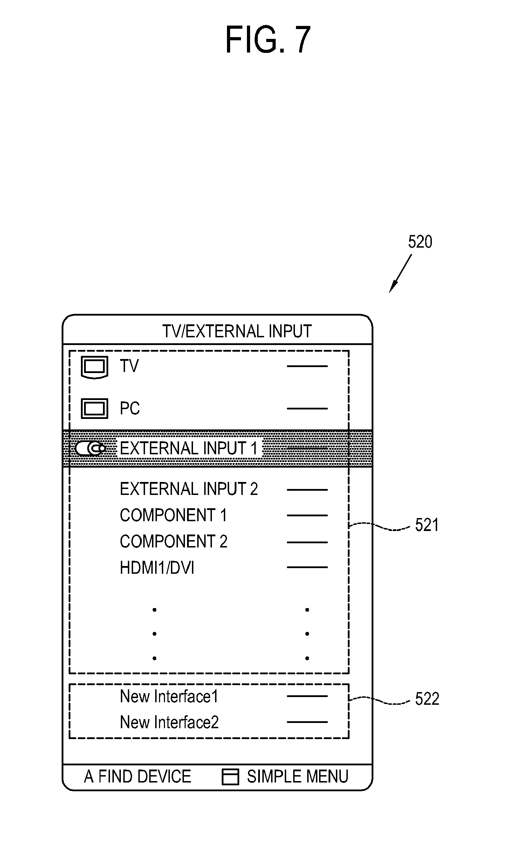

In this case, the image signal may be received via the upgrading apparatus 200 as well as via the first connector 110 of the display apparatus 100. In the case of the UI image 510 as in FIG. 6, the external input state which indicates a direct reception of the image signal by the upgrading apparatus 200 is not considered, and the display apparatus 100 displays a UI image 520 as shown in FIG. 7.

FIG. 7 illustrates an example of the UI image 520 showing information relating to external input states displayed by the display apparatus 100 when the upgrading apparatus 200 is connected to the display apparatus 100.

As shown in FIG. 7, if the display apparatus 100 determines that the upgrading apparatus 200 may directly receive the image signal, the display apparatus 100 displays information relating to both an external input state 521 for the display apparatus 100 and an external input state 522 for the upgrading apparatus 200, in the UI image 520. In particular, the UI image 520 in FIG. 7 also includes information relating to the external input state which corresponds to a direct reception of the image signal by the upgrading apparatus 200, as compared with the UI image 510 in FIG. 6.

More particularly, the UI image 520 provides an option 521 for selecting the image signal to be received via the display apparatus 100 and an option 522 for selecting the image signal to be received directly by the upgrading apparatus 200. "New Interface 1" and "New Interface 2" 522, which show the external input states which correspond to a direct reception of the image signal by the upgrading apparatus 200, may be displayed in various ways, such as, for example, applying the standard and name of the respective external input states 521 for the display apparatus 100.

The external input state 521 for the display apparatus 100 and the external input state 522 for the upgrading apparatus 200 may be displayed in the same layer within a single window as shown in FIG. 7, or may be displayed in separate windows.

If one external input state is selected via the UI image 520, the display apparatus 100 receives the image signal based on the selected external input state and processes the received image signal and displays an image based on the processed image signal. When the upgrading apparatus 200 upgrades the display apparatus 100, a user may efficiently select the external input state.

It has been described above that the display apparatus 100 is the subject of control according to the present exemplary embodiment, but the upgrading apparatus 200 may also be the subject of control when the display apparatus 100 and the upgrading apparatus 200 are connected to each other. This can be adjusted by design and does not limit the concept of the present exemplary embodiment.

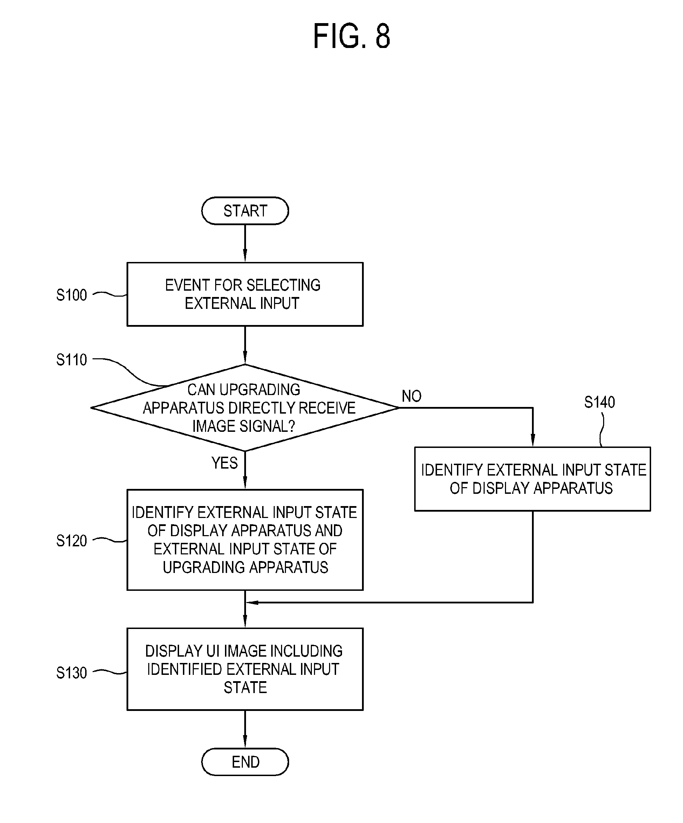

Hereinafter, a control method which is executable by using the display apparatus 100 according to the present exemplary embodiment will be described with reference to FIG. 8.

FIG. 8 is a control flowchart which illustrates the control process. According to the present exemplary embodiment, the state in which the display apparatus 100 and the upgrading apparatus 200 are connected to each other will be referred to as an initial state.

As shown in FIG. 8, upon an occurrence of an event for selecting the external input state in operation S100, the display apparatus 100 determines whether the connected upgrading apparatus 200 may directly receive the image signal in operation S110.

If a determination is made in operation S110 that the upgrading apparatus 200 may directly receive the image signal, the display apparatus 100 identifies the external input state of the display apparatus 100 and the external input state of the upgrading apparatus 200 in operation S120. After the identification is completed, in operation S130, the display apparatus 100 displays a UI image which includes information relating to the identified external input state. The UI image displayed in the foregoing case includes both the external input state of the display apparatus 100 and the external input state of the upgrading apparatus 200, and thus a user may select one of those external input states.

If a determination is made in operation S110 that the upgrading apparatus 200 may not directly receive the image signal, the display apparatus 100 identifies only the external input state of the display apparatus 100 in operation S140. After the identification is completed, in operation S130, the display apparatus 100 displays a UI image which includes information relating to the identified external input state (S130). The UI image displayed in the foregoing case includes only the external input state of the display apparatus 100.

According to the present exemplary embodiment, if the upgrading apparatus 200 is connected to, and upgrades, the display apparatus 100 and the external input states extend, a user may easily select one of the extended external input states.

In the configuration in which the upgrading apparatus 200 is connected to the first connector 110, the display apparatus 100 according to a second exemplary embodiment may provide a UI image which facilitates a user selection of one of a plurality of external input states, i.e., a user selection of an image supply source which supplies an image to be displayed on the display 130.

Hereinafter, an example of a UI image provided by the display system 1 according to the second exemplary embodiment will be described. In the present exemplary embodiment, when the display apparatus 100 and the upgrading apparatus 200 are not connected to each other, the first controller 160 controls operations of the display apparatus 100. When the display apparatus 100 and the upgrading apparatus 200 are connected to each other, the second controller 260 controls operations of both of the display apparatus 100 and the upgrading apparatus 200.

However, this may differ depending on the specific method which is used for upgrading the display apparatus 100 by the upgrading apparatus 200 as described in the foregoing exemplary embodiment, and does not limit the concept of the present invention. For example, when the display apparatus 100 and the upgrading apparatus 200 are connected to each other, the first controller 160 may control operations of both of the display apparatus 100 and the upgrading apparatus 200.

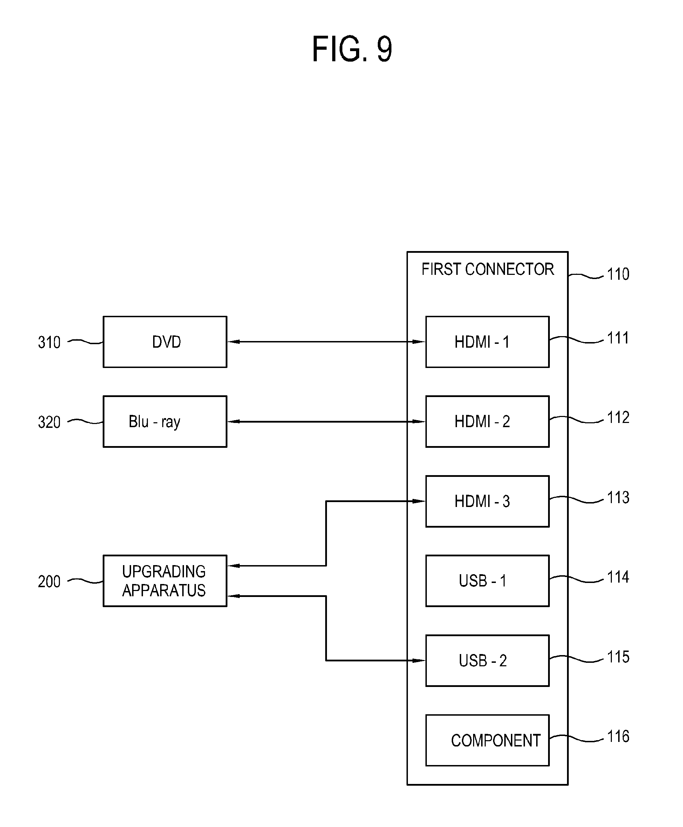

FIG. 9 illustrates an example of connecting image supply sources 310 and 320 and the upgrading apparatus 200 to the first connector 110.

As shown in FIG. 9, the first connector 110 includes a plurality of connection terminals 111, 112, 113, 114, 115, and 116. The connection terminals 111, 112, 113, 114, 115, and 116 include terminals having various respective standards such as HDMI terminals 111, 112 and 113, USB terminals 114 and 115, and a component terminal 116.

According to the present exemplary embodiment, the first HDMI terminal 111 is connected to a DVD player 310 and the second HDMI terminal 112 is connected to a Blu-ray player 320. The upgrading apparatus 200 is connected to the third HDMI terminal 113 and the second USB terminal 115.

The respective standard for each of the plurality of terminals which is described in the present exemplary embodiment is an example and does not limit the concept of the present exemplary embodiment. In particular, the respective standard for each of the plurality of terminals is described only for purposes of convenience.

The display apparatus 100 may receive a broadcasting signal which is transmitted according to a digital television (DTV) standard by a transmission apparatus (not shown) of a broadcasting station. The broadcasting signal may be received via the first connector 110 or a reception member (not shown) additionally installed in the display apparatus 100.

If the display apparatus 100 is implemented as a TV as in the present exemplary embodiment, an operation of receiving and processing the broadcasting signal and displaying a broadcasting image is performed in accordance with a default mode of the display apparatus 100.

In the default mode, the display apparatus 100 may process an image signal supplied by one of image supply sources 310 and 320 which are locally connected to the first connector 110, and may display an image based on the processed image signal as well as displaying the broadcasting image based on the broadcasting signal. The display apparatus 100 selects one of a plurality of image supply sources 310 and 320 and processes and displays an image signal which is received from the selected image supply source. This is called a connection mode of the selected image supply source.

In particular, the display apparatus 100 may select one of the default mode and the connection mode with respect to the image supply sources 310 and 320 and operate in the selected mode. In order to facilitate a user selection of the mode, i.e., to select a source of the image signal, the display apparatus 100 provides a UI image.

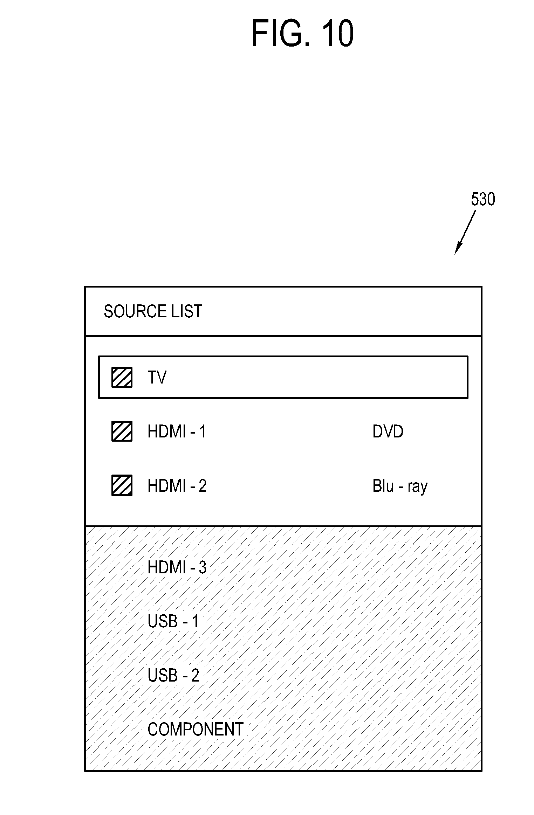

FIG. 10 illustrates an example of a UI image 530 which is displayed by the display apparatus 100 when the display apparatus 100 and the upgrading apparatus 200 are not connected to each other. In particular, the UI image 530 in FIG. 10 is an image which may be displayed when the upgrading apparatus 200 in FIG. 9 is not connected to the third HDMI terminal 113 and the second USB terminal 115.

As shown in FIG. 10, if a user transmits a command to the first controller 160 via the user input unit 140 to change the source of the image signal, the first controller 160 displays the UI image 530 based on the external connection state of the first connector 110.

In the UI image 530, "TV" refers to a default mode of the display apparatus 100, i.e., a mode of displaying a broadcasting image. "HDMI-1" and "HDMI-2" refer to the first HDMI terminal 111 and the second HDMI terminal 112, respectively. The UI image 530 shows that the DVD player 310 is connected to the first HDMI terminal 111 and that the Blu-ray player 320 is connected to the second HDMI terminal 112.

The crosshatched lower part of the UI image 530 refers to a disabled area within which a user is not able to make a selection from the UI image 530. In particular, at the current time, as illustrated in FIG. 10, no device is connected to any of the third HDMI terminal 113, the first USB terminal 114, the second USB terminal 115 and the component terminal 116 (referring to FIG. 9), and thus the first controller 160 may display information relating to the foregoing terminals as disabled so that a user may not select the foregoing terminals via the user input unit 140. Alternatively, the first controller 160 may delete the information relating to the foregoing terminals from the UI image 530.

If a user selects one of the default mode, the connection mode of the DVD player 310 and the connection mode of the Blu-ray player 320 via the UI image 530, the first controller 160 controls the display apparatus 100 to receive and process the image signal based on the selected mode.

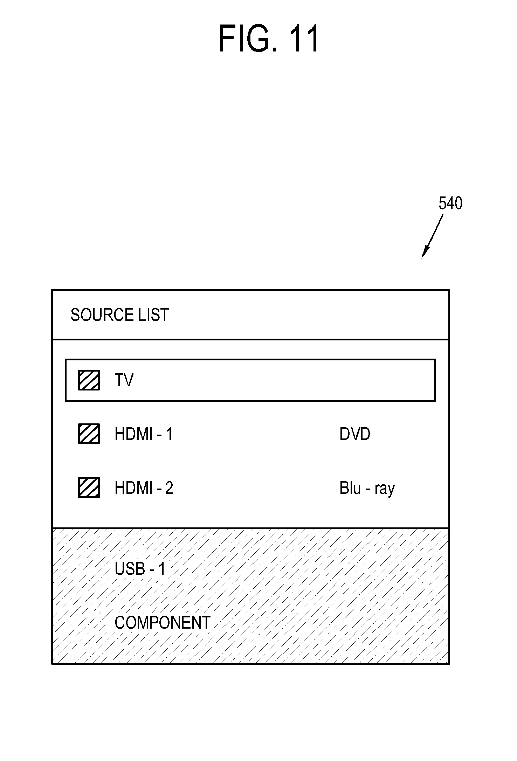

FIG. 11 illustrates an example of a UI image 540 which is displayed by the display apparatus 100 when the display apparatus 100 and the upgrading apparatus 200 are connected to each other. In particular, the UI image 540 in FIG. 11 is an image which may be displayed when the upgrading apparatus 200 in FIG. 9 is connected to the third HDMI terminal 113 and the second USB terminal 115.

First, if the upgrading apparatus 200 is connected to the plurality of terminals 113 and 115 of the third HDMI terminal 113 and the second USB terminal 115, the second controller 260 displays information relating to only one of the third HDMI terminal 113 and the second USB terminal 115 in the UI image 540 in order to display the connection mode of the upgrading apparatus 200. For example, the second controller 260 may display information relating to the connection of the upgrading apparatus 200 to the third HDMI terminal 113 and may not display information relating to the second USB terminal 115 in the UI image 540.

As shown in FIG. 11, the second controller 260 amends the name of the connection mode of the upgrading apparatus 200 from the UI image 540 and displays the mode as the default mode. If the default mode of the display apparatus 100 in FIG. 6 has been displayed as "TV", the second controller 260 displays information relating to the connection mode of the upgrading apparatus 200 as "TV" as the default mode of the current state in the UI image 540, rather than displaying the default mode which would exist in the case of the non-connection between the display apparatus 100 and the upgrading apparatus 200 (refer to "TV" in FIG. 10).

If "TV" is selected from the UI image 540, the second controller 260 processes and displays the broadcasting signal by using the image processing operation of the display apparatus 100 that has been upgraded by the upgrading apparatus 200.

According to the present exemplary embodiment, the UI image 540 is provided for the convenience of a user with respect to selecting the source of the image signal, in correspondence with the connection between the display apparatus 100 and the upgrading apparatus 200.

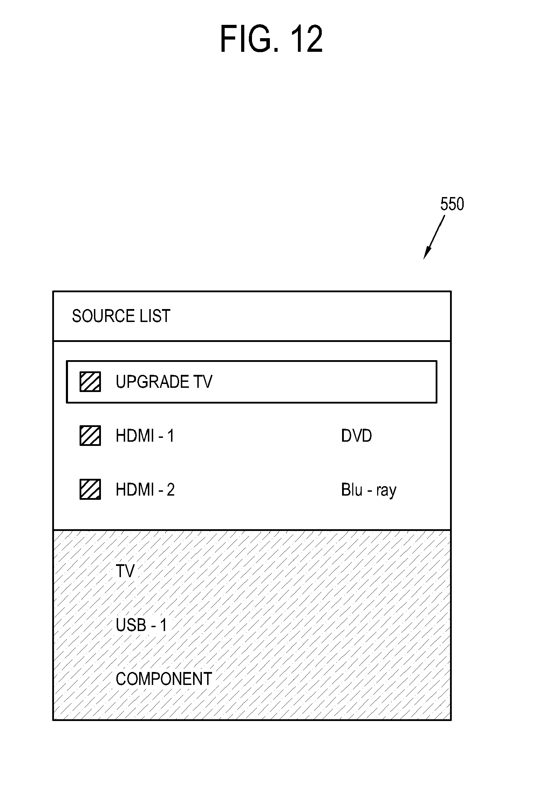

FIG. 12 illustrates an example of a UI image 550 which is different from the case illustrated in FIG. 11.

As shown in FIG. 12, the second controller 260 may display, in the UI image 550, information relating to both of a default mode of the display apparatus 100 which is used when the display apparatus 100 and the upgrading apparatus 200 are not connected to each other, and a connection mode of the upgrading apparatus 200 which is used when the display apparatus 100 and the upgrading apparatus 200 are connected to each other.

If the former is named as "TV" and the latter is named as "Upgrade TV" in the UI image 550, the second controller 260 displays the connection mode of the upgrading apparatus 200 as "Upgrade TV" as the default mode of the display system 1, and disables "TV" so that "TV" cannot be selected. Alternatively, the second controller 260 may not display "TV" in the UI image 550.

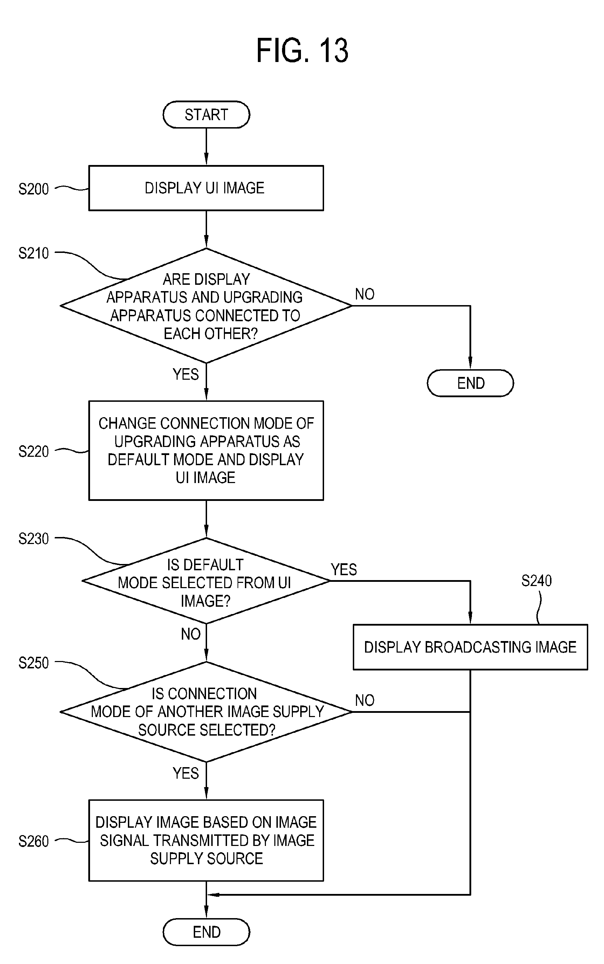

Hereinafter, a control method which is executable by using the display system 1 according to the present exemplary embodiment will be described with reference to FIG. 13. FIG. 13 is a control flowchart which illustrates the control process.

As shown in FIG. 13, in operation S200, the display apparatus 100 displays the UI image regardless of whether or not the display apparatus 100 and the upgrading apparatus 200 are connected to each other. If a determination is made in operation S210 that the display apparatus 100 and the upgrading apparatus 200 are connected to each other, the display apparatus 100 changes the connection mode of the upgrading apparatus 200 to the default mode and displays the default mode in the UI image in operation S220.

If the default mode is selected via the UI image in operation S230, then in operation S240, the broadcasting image is displayed by the display system 1 which has been upgraded by the upgrading apparatus 200. If the connection mode of another image supply source 300 is selected via the UI image in operation S250, then in operation S260, the image signal which has been received from the image supply source 300 is processed, and the image is displayed based on the processed image signal.

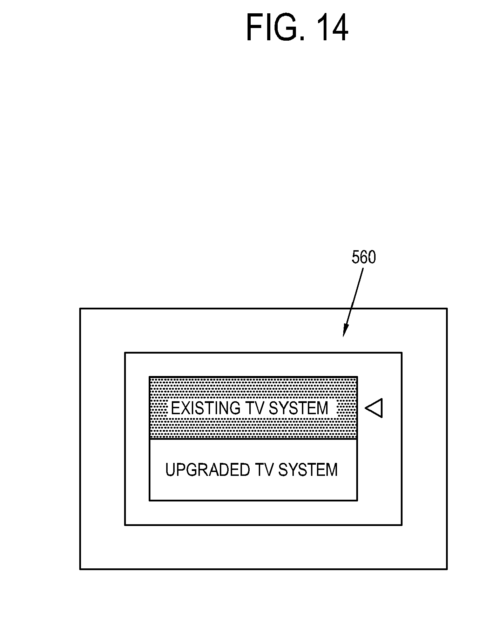

According to a third exemplary embodiment, when the display apparatus 100 and the upgrading apparatus 200 are connected to each other, the display apparatus 100 may display a UI image 560 which facilitates a user selection relating to whether to upgrade the display apparatus 100 by using the upgrading apparatus 200, as illustrated in FIG. 14.

FIG. 14 illustrates an example of the UI image 560 according to the third exemplary embodiment.

As shown in FIG. 14, the UI image 560 facilitates a user selection relating to an option, e.g., for selecting an existing TV system and an option for selecting an upgraded TV system.

In the case of the former option being selected by the user, the upgrading apparatus 200 does not upgrade the display apparatus 100, and the image processing operation is performed by using the existing configuration of the display apparatus 100. In this case, the upgrading apparatus 200 is connected to the display apparatus 100 but is disabled, and does not upgrade the display apparatus 100.

In the case of the latter option being selected by the user, the upgrading apparatus 200 upgrades the display apparatus 100 as described in the foregoing exemplary embodiments.

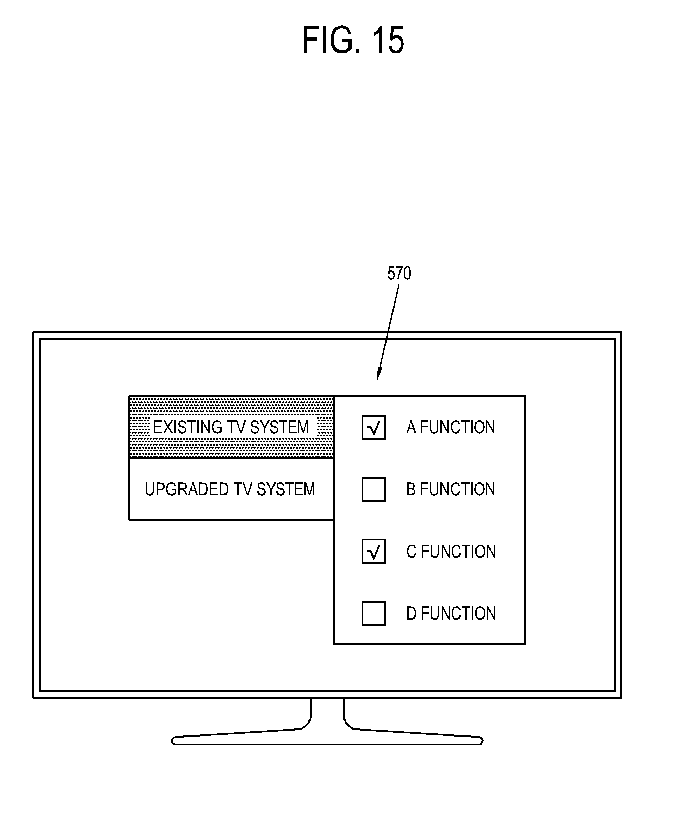

FIG. 15 illustrates an example of a UI image 570 according to another exemplary embodiment that is different from the case which is illustrated in FIG. 14.

As shown in FIG. 15, if the display apparatus 100 and the upgrading apparatus 200 provide a plurality of functions or processes with respect to the image processing operation, the UI image 570 facilitates a user selection with respect to the respective functions.

For example, a user may enable "A function" and "C function" and disable "B function" and "D function" which are provided in conjunction with "existing TV system" from the UI image 570.

The display apparatus 100 or the upgrading apparatus 200 performs the image processing operation based on the function that has been selectively enabled via the UI image 570.

For example, if "B function" and "D function" of "existing TV system" are selected to be disabled, the display apparatus 100 controls the upgrading apparatus 200 to provide functions corresponding to "B function" and "D function" which have been provided by the display apparatus 100.

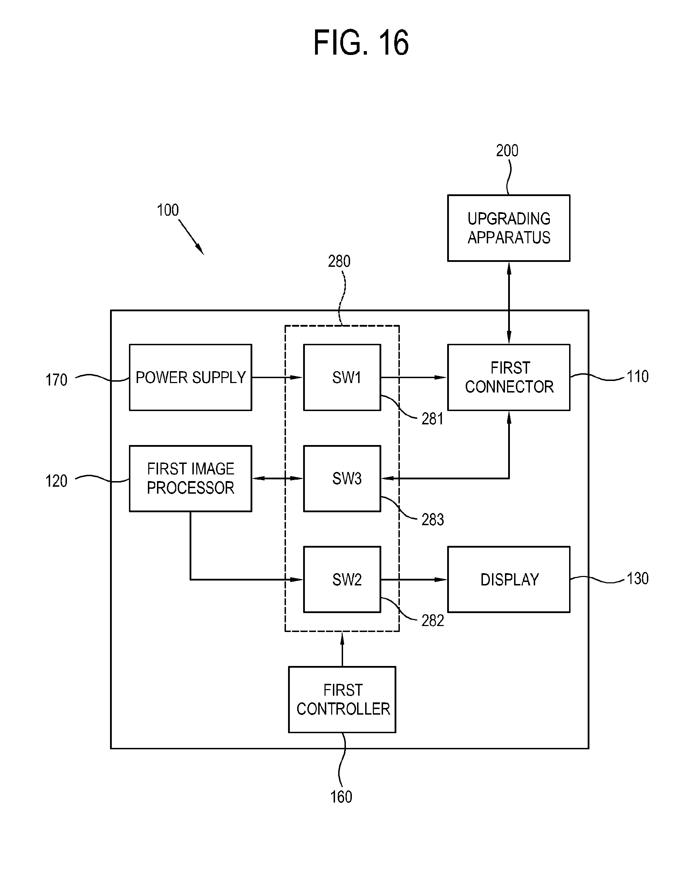

FIG. 16 is a block diagram of the display apparatus 100 according to the present exemplary embodiment. FIG. 16 illustrates only a part of the display apparatus 100 in order to briefly describe the present exemplary embodiment.

As shown in FIG. 16, the display apparatus 100 includes a first connector 110, a first image processor 120, a display 130 and a first controller 160, which are substantially the same as those of the foregoing exemplary embodiments. Thus, detailed description of these elements will be omitted. The display apparatus 100 further includes a power supply 170 which supplies system power to the display apparatus 100, and a switching module 280 which is switched on/off in order to transmit and supply image signals and power from the display apparatus 100 to the upgrading apparatus 200.

The switching module 280 includes a first switch 281 which is switched on/off in order to convey power from the power supply 170 to the upgrading apparatus 200, a second switch 282 which is switched on/off in order to convey an image signal from the first image processor 120 to the display 130, and a third switch 283 which is switched on/off in order to facilitate an exchange of image signals between the first image processor 120 and the upgrading apparatus 200. The switching operation of the switching module 280 is controlled by the first controller 160, and the switching module 280 may be switched on/off in order to transmit various signals in addition to the configuration described in the present exemplary embodiment.

The first switch 281 is installed on a power route between the first connector 110 and the power supply 170, and may convey or cut off power supplied by the power supply 170 with respect to the upgrading apparatus 200. If the first switch 281 cuts off the supply of power from power supply 170, the upgrading apparatus 200 may not receive power from the display apparatus 100.

Such a cutoff may be performed when the upgrading apparatus 200 includes an additional power means and therefore does not require a supply of power from the display apparatus 100, or when the upgrading apparatus 200 is disabled. As described in the foregoing exemplary embodiment (referring to FIG. 14), if the upgrading apparatus 200 is disabled, the first controller 160 may control the first switch 281 to cut off the supply of power from power supply 170.

The second switch 282 selectively cuts off the conveyance of the image signal which has been processed by the first image processor 120, with respect to the display 130. If the upgrading apparatus 200 is configured to directly output the image signal from the upgrading apparatus 200 to the display 130, the second switch 282 may cut off the transmission of the image signal.

The third switch 283 is installed on a signal route between the first image processor 120 and the first connector 110, and selectively cuts off a signal exchange between the first image processor 120 and the upgrading apparatus 200. If the upgrading apparatus 200 is disabled, the third switch 283 may cut off the signal transmission between the first image processor 120 and the upgrading apparatus 200.

If the image signal which has been directly received by the upgrading apparatus 200 is transmitted to the first image processor 120 or the image signal processed by the upgrading apparatus 200 is transmitted to the first image processor 120, the third switch 283 facilitates a signal transmission between the first image processor 120 and the upgrading apparatus 200.

The first controller 160 selectively controls the switching module 280 based on the performance of the upgrading operation by the upgrading apparatus 200, in order to thereby selectively allow or block power or signal transmission within the display apparatus 100 or between the display apparatus 100 and the upgrading apparatus 200.

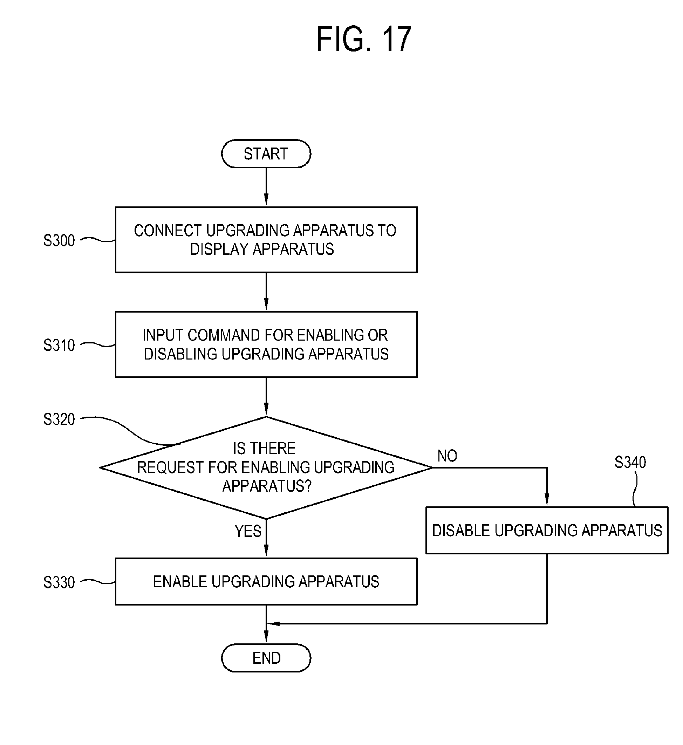

Hereinafter, a control method which is executable by using the display apparatus 100 according to the present exemplary embodiment will be described with reference to FIG. 17. FIG. 17 is a control flowchart which illustrates the control process.

As shown in FIG. 17, in operation S300, the upgrading apparatus 200 is connected to the display apparatus 100.

While in this connection state, in operation S31 0, the display apparatus 100 receives an input command regarding whether to enable or disable the upgrading apparatus 200, i.e., whether to allow the performance of the upgrading operation by the upgrading apparatus 200. Such input may be performed by the method as illustrated in FIG. 14.

In operation S320, the display apparatus 100 determines whether there is a request for enabling the upgrading apparatus 200, based on the received input command.

If it is determined that there is a request for enabling the upgrading apparatus 200, then in operation S330, the display apparatus 100 enables the upgrading apparatus 200 to upgrade the display apparatus 100.

If it is determined that is a request for disabling, rather than enabling, the upgrading apparatus 200, then in operation S340, the display apparatus 100 disables the upgrading apparatus 200 and performs the existing image processing operation.

According to the present exemplary embodiment, even if the upgrading apparatus 200 is connected to the display apparatus 100, a user may select whether to upgrade the display apparatus 100 via the upgrading apparatus 200, according to his/her preferences.

Although a few exemplary embodiments have been shown and described, it will be appreciated by those skilled in the art that changes may be made in these exemplary embodiments without departing from the principles and spirit of the present disclosure, the range of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display unit;
an image processor which processes an image signal which has been externally input according to an external input state selected from at least one preset external input state, by using a preset image processing operation, and displays an image on the display unit based on the processed image signal;
a connector to which an upgrading apparatus that upgrades the image processing operation is connectable; and
a controller which displays, on the display unit, a user interface (UI) image for selecting one of the at least one preset external input state of the display apparatus, and if a determination is made that an image signal is capable of being externally input to the upgrading apparatus via a route that does not include the display apparatus, displays the selected external input state of the display apparatus and the upgrading apparatus in the UI image.

2. The display apparatus according to claim 1, wherein if the external input state of the image signal externally input to the upgrading apparatus is selected through the UI image, the controller changes a reception of the image signal according to the selected external input state.

3. The display apparatus according to claim 2, wherein the upgrading apparatus comprises an upgrading apparatus receiver which receives the image signal, and the controller determines that the upgrading apparatus is capable of receiving the image signal directly, based on the upgrading apparatus comprising the upgrading apparatus receiver.

4. The display apparatus according to claim 1, wherein the controller displays a connection state of the upgrading apparatus with respect to the connector, as one of the at least one external input state of the display apparatus in the UI image.

5. The display apparatus according to claim 4, wherein the UI image is provided to facilitate a user selection of at least one first function provided by the display apparatus and at least one second function provided by the upgrading apparatus with respect to the image processing operation, and the controller controls the image processing operation to be performed based on the first and second functions that have been selected by the user.

6. The display apparatus according to claim 5, further comprising a switching unit which, when switched on, causes the display apparatus to transmit the image signal or power from the display apparatus to the upgrading apparatus via the connector.

7. The display apparatus according to claim 4, wherein the controller displays a default mode in which the display apparatus performs a default operation, in the UI image, when the upgrading apparatus is not connected to the connector, and displays a connection mode of the upgrading apparatus as the default mode in the UI image if the upgrading apparatus is connected to the connector.

8. The display apparatus according to claim 7, wherein the connector comprises a plurality of connection terminals which are connectable to the upgrading apparatus and to at least one image supply source, and the UI image is provided to facilitate a user selection of at least one of the plurality of connection terminals.

9. The display apparatus according to claim 8, wherein the controller deletes the connection terminal connected to the upgrading apparatus from the UI image.

10. The display apparatus according to claim 8, wherein if two or more connection terminals are connected to the upgrading apparatus, the controller displays in the UI image only one of the two or more connection terminals connected to the upgrading apparatus.

11. The display apparatus according to claim 7, wherein, upon connection of the upgrading apparatus, the controller deletes the default mode used when the upgrading apparatus is not connected, from the UI image, and displays the connection mode of the upgrading apparatus in the UI image.

12. The display apparatus according to claim 7, wherein the display apparatus comprises a television (TV) and the default mode comprises a mode in which a broadcasting signal is displayed based on a broadcasting signal.

13. An upgrading apparatus for use in conjunction with a display apparatus comprising:
a connector which is connectable to the display apparatus that processes an image signal that is externally input based on an external input state selected from at least one preset external input state by using a preset image processing operation and displays an image based on the processed image signal; and
an image processor which performs an upgraded image processing operation if the display apparatus is connected to the connector; and
wherein the display apparatus includes a controller which displays respective external input states of the display apparatus and the upgrading apparatus in a user interface (UI) image if an image signal is capable of being externally input to the upgrading apparatus via a route that does not include the display apparatus, in order to facilitate a user selection of one of the respective external input states of the display apparatus.

14. A control method of a display apparatus comprising:
processing an image signal that is externally input based on an external input state selected from at least one preset external input state, by using a preset image processing operation, and displaying an image based on the processed image signal; and
displaying a user interface (UI) image which is provided to facilitate a user selection of one of the at least one preset external input state of the display apparatus, wherein the displaying the UI image comprises displaying respective external input states of the display apparatus and an upgrading apparatus in the UI image if a determination is made that, upon connection of the upgrading apparatus which upgrades the image processing operation, the upgrading apparatus is capable of receiving the image signal via a route that does not include the display apparatus.
